(19)

**Europäisches Patentamt**
**European Patent Office**
**Office européen des brevets**

(11) **EP 4 465 683 A2**

(12) **EUROPEAN PATENT APPLICATION**

(43) Date of publication:
**20.11.2024 Bulletin 2024/47**

(21) Application number: **24172607.4**

(22) Date of filing: **26.04.2024**

(51) International Patent Classification (IPC):
**H04W 24/08** (2009.01)   **H04W 28/02** (2009.01)
**H04L 5/00** (2006.01)   **H04L 43/0888** (2022.01)
**H04L 47/28** (2022.01)

(52) Cooperative Patent Classification (CPC):
**H04W 24/08; H04L 5/001; H04L 43/0888;**
**H04L 47/28; H04W 28/0278; H04W 76/15**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.04.2023 FI 20235479**

(71) Applicant: **Nokia Solutions and Networks Oy**
**02610 Espoo (FI)**

(72) Inventor: **KOLLÁR, Martin**
**Kosice (SK)**

(74) Representative: **Nokia EPO representatives**
**Nokia Technologies Oy**
**Karakaari 7**
**02610 Espoo (FI)**

(54) **METHOD FOR DISTRIBUTION UNIT COMPONENTS COOPERATION IN TERMS OF SIGNIFICANT REDUCTION OF DOWNLINK USER THROUGHPUT**

(57)    Systems, methods, apparatuses, and computer program products for improving distribution unit component cooperation. One method may include determining whether at least one radio link control protocol data unit has arrived at an empty layer 2 low buffer of a primary cell and at least one related secondary cell; upon determining that the at least one radio link control protocol data unit has arrived at the empty layer 2 low buffer of the primary cell and at least one related secondary cell, starting a new burst; and determining whether at least one layer 2 low report comprising at least one of an identifier of the at least one radio link control protocol data unit from a list of primary cells or related secondary cell layer 2 low instances has been received.

**Description**

**TECHNICAL FIELD**

Some example embodiments may generally relate to mobile or wireless telecommunication systems, such as 3rd Generation Partnership Project (3GPP) Long Term Evolution (LTE), 5th generation (5G) radio access technology (RAT), new radio (NR) access technology, 6th generation (6G), and/or other communications systems. For example, certain example embodiments may relate to systems and/or methods for improving distribution unit component cooperation.

**BACKGROUND**

Examples of mobile or wireless telecommunication systems may include radio frequency (RF) 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine-type communication (mMTC). NR is expected to deliver extreme broadband, ultra-robust, low-latency connectivity, and massive networking to support the Internet of Things (IoT). The next generation radio access network (NG-RAN) represents the radio access network (RAN) for 5G, which may provide radio access for NR, LTE, and LTE-A. It is noted that the nodes in 5G providing radio access functionality to a user equipment (*e.g.*, similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio.

**SUMMARY**

In accordance with some example embodiments, a method may include determining whether at least one radio link control protocol data unit has arrived at an empty layer 2 low buffer of a primary cell and at least one related secondary cell. The method may further include upon determining that the at least one radio link control protocol data unit has arrived at the empty layer 2 low buffer of the primary cell and at least one related secondary cell, start a new burst. The method may further include determining whether at least one layer 2 low report comprising at least one of an identifier of the at least one radio link control protocol data unit from a list of primary cell or related secondary cell layer 2 low instances has been received.

In accordance with certain example embodiments, an apparatus may include means for determining whether at least one radio link control protocol data unit has arrived at an empty layer 2 low buffer of a primary cell and at least one related secondary cell. The apparatus may further include means for, upon determining that the at least one radio link control protocol data unit has arrived at the empty layer 2 low buffer of the primary cell and at least one related secondary cell, start a new burst. The apparatus may further include means for determining whether at least one layer 2 low report comprising at least one of an identifier of the at least one radio link control protocol data unit from a list of primary cell or related secondary cell layer 2 low instances has been received.

In various example embodiments, a non-transitory computer readable medium may include program instructions that, when executed by an apparatus, cause the apparatus to perform at least a method. The method may include determining whether at least one radio link control protocol data unit has arrived at an empty layer 2 low buffer of a primary cell and at least one related secondary cell. The method may further include, upon determining that the at least one radio link control protocol data unit has arrived at the empty layer 2 low buffer of the primary cell and at least one related secondary cell, starting a new burst. The method may further include determining whether at least one layer 2 low report comprising at least one of an identifier of the at least one radio link control protocol data unit from a list of primary cell or related secondary cell layer 2 low instances has been received.

In accordance with some example embodiments, a computer program product may perform a method. when executed by an apparatus, cause the apparatus to perform at least a method. The method may include determining whether at least one radio link control protocol data unit has arrived at an empty layer 2 low buffer of a primary cell and at least one related secondary cell. The method may further include, upon determining that the at least one radio link control protocol data unit has arrived at the empty layer 2 low buffer of the primary cell and at least one related secondary cell, starting a new burst. The method may further include determining whether at least one layer 2 low report comprising at least one of an identifier of the at least one radio link control protocol data unit from a list of primary cell or related secondary cell layer 2 low instances has been received.

In accordance with certain example embodiments, an apparatus may include at least one processor and at least one memory storing instructions that, when executed by the at least one processor, cause the apparatus at least to determine whether at least one radio link control protocol data unit has arrived at an empty layer 2 low buffer of a primary cell and at least one related secondary cell. The at least one memory and instructions, when executed by the at least one processor, may further cause the apparatus at least to, upon determining that the at least one radio link control protocol data unit has arrived at the empty layer 2 low buffer of the primary cell and at least one related secondary cell, start a new burst. The at least one memory and instructions, when executed by the at least one processor, may further cause the apparatus at least to determine whether at least one layer 2 low report comprising at least one of an identifier of the at least one radio link control protocol data unit from a list of primary cell or related secondary cell layer 2 low instances has been received.

In accordance with various example embodiments, an apparatus may include determining circuitry configured to determine whether at least one radio link control protocol data unit has arrived at an empty layer 2 low buffer of a primary cell and at least one related secondary cell. The apparatus may further include starting circuitry configured to, upon determining that the at least one radio link control protocol data unit has arrived at the empty layer 2 low buffer of the primary cell and at least one related secondary cell, start a new burst. The apparatus may further include determining circuitry configured to determine whether at least one layer 2 low report comprising at least one of an identifier of the at least one radio link control protocol data unit from a list of primary cell or related secondary cell layer 2 low instances has been received.

In accordance with some example embodiments, a method may include determining whether at least one radio link control protocol data unit has arrived at an empty layer 2 low buffer. The method may further include upon determining that the at least one radio link control protocol data unit has arrived at the empty layer 2 low buffer, starting a new layer 2 low burst. The method may further include determining whether the layer 2 low buffer is not empty.

In accordance with certain example embodiments, an apparatus may include means for determining whether at least one radio link control protocol data unit has arrived at an empty layer 2 low buffer. The apparatus may further include means for upon determining that the at least one radio link control protocol data unit has arrived at the empty layer 2 low buffer, starting a new layer 2 low burst. The apparatus may further include means for determining whether the layer 2 low buffer is not empty.

In accordance with various example embodiments, a non-transitory computer readable medium may include program instructions that, when executed by an apparatus, cause the apparatus to perform at least a method. The method may include determining whether at least one radio link control protocol data unit has arrived at an empty layer 2 low buffer. The method may further include upon determining that the at least one radio link control protocol data unit has arrived at the empty layer 2 low buffer, starting a new layer 2 low burst. The method may further include determining whether the layer 2 low buffer is not empty.

In accordance with some example embodiments, a computer program product may perform a method. The method may include determining whether at least one radio link control protocol data unit has arrived at an empty layer 2 low buffer. The method may further include upon determining that the at least one radio link control protocol data unit has arrived at the empty layer 2 low buffer, starting a new layer 2 low burst. The method may further include determining whether the layer 2 low buffer is not empty.

In accordance with certain example embodiments, an apparatus may include at least one processor and at least one memory storing instructions that, when executed by the at least one processor, cause the apparatus at least to determine whether at least one radio link control protocol data unit has arrived at an empty layer 2 low buffer. The at least one memory and instructions, when executed by the at least one processor, may further cause the apparatus at least to upon determining that the at least one radio link control protocol data unit has arrived at the empty layer 2 low buffer, start a new layer 2 low burst. The at least one memory and instructions, when executed by the at least one processor, may further cause the apparatus at least to determine whether the layer 2 low buffer is not empty.

In accordance with various example embodiments, an apparatus may include determining circuitry configured to determine whether at least one radio link control protocol data unit has arrived at an empty layer 2 low buffer. The apparatus may further include starting circuitry configured to, upon determining that the at least one radio link control protocol data unit has arrived at the empty layer 2 low buffer, start a new layer 2 low burst. The apparatus may further include determining circuitry configured to determine whether the layer 2 low buffer is not empty.

In accordance with some example embodiments, a method may include determining whether at least one radio link control protocol data unit has arrived at an empty layer 2 low buffer of a primary cell and at least one related secondary cell. The method may further include starting at least one new burst. The method may further include starting at least one timer.

In accordance with certain example embodiments, an apparatus may include means for determining whether at least one radio link control protocol data unit has arrived at an empty layer 2 low buffer of a primary cell and at least one related secondary cell. The apparatus may further include means for starting at least one new burst. The apparatus may further include means for starting at least one timer.

In accordance with various example embodiments, a non-transitory computer readable medium may include program instructions that, when executed by an apparatus, cause the apparatus to perform at least a method. The method may include determining whether at least one radio link control protocol data unit has arrived at an empty layer 2 low buffer of a primary cell and at least one related secondary cell. The method may further include starting at least one new burst. The method may further include starting at least one timer.

In accordance with some example embodiments, a computer program product may perform a method. The method may include determining whether at least one radio link control protocol data unit has arrived at an empty layer 2 low buffer of a primary cell and at least one related secondary cell. The method may further include starting at least one new burst. The method may further include starting at least one timer.

In accordance with certain example embodiments, an apparatus may include at least one processor and at least one memory storing instructions that, when executed by the at least one processor, cause the apparatus at least to determine whether at least one radio link control protocol data unit has arrived at an empty layer 2 low buffer of a primary cell and at least one related secondary cell. The at least one memory and instructions, when executed by the at least one processor, may further cause the apparatus at least to start at least one new burst. The at least one memory and instructions, when executed by the at least one processor, may further cause the apparatus at least to start at least one timer.

In accordance with various example embodiments, an apparatus may include determining circuitry configured to determine whether at least one radio link control protocol data unit has arrived at an empty layer 2 low buffer of a primary cell and at least one related secondary cell. The apparatus may further include starting circuitry configured to start at least one new burst. The apparatus may further include starting circuitry configured to start at least one timer.

In accordance with some example embodiments, a method may include determining whether at least one radio link control protocol data unit has arrived at an empty layer 2 low buffer. The method may further include starting at least one timer.

In accordance with certain example embodiments, an apparatus may include means for determining whether at least one radio link control protocol data unit has arrived at an empty layer 2 low buffer. The apparatus may further include means for starting at least one timer.

In accordance with various example embodiments, a non-transitory computer readable medium may include program instructions that, when executed by an apparatus, cause the apparatus to perform at least a method. The method may include determining whether at least one radio link control protocol data unit has arrived at an empty layer 2 low buffer. The method may further include starting at least one timer.

In accordance with some example embodiments, a computer program product may perform a method. The method may include determining whether at least one radio link control protocol data unit has arrived at an empty layer 2 low buffer. The method may further include starting at least one timer.

In accordance with certain example embodiments, an apparatus may include at least one processor and at least one memory storing instructions that, when executed by the at least one processor, cause the apparatus at least to determine whether at least one radio link control protocol data unit has arrived at an empty layer 2 low buffer. The at least one memory and instructions, when executed by the at least one processor, may further cause the apparatus at least to start at least one timer.

In accordance with various example embodiments, an apparatus may include determining circuitry configured to determine whether at least one radio link control protocol data unit has arrived at an empty layer 2 low buffer. The apparatus may further include starting circuitry configured to start at least one timer.

**BRIEF DESCRIPTION OF THE DRAWINGS**

For a proper understanding of example embodiments, reference should be made to the accompanying drawings, wherein:

FIG. 1 illustrates an example of data division into samples based on buffer utilization;
FIG. 2 illustrates measurements on MAC SDU level on an $i^{th}$ burst for carrier aggregation;
FIG. 3 illustrates measurements on an $i^{th}$ burst for a carrier aggregation scenario including two component carriers;
FIG. 4 illustrates an example of a flow diagram of a method according to various example embodiments;
FIG. 5 illustrates an example of a flow diagram of another method according to various example embodiments;
FIG. 6 illustrates an example of various example embodiments;
FIG. 7 illustrates an example of a flow diagram of a method according to various example embodiments;
FIG. 8 illustrates an example of a flow diagram of another method according to various example embodiments;
FIG. 9 illustrates an example of various network devices according to some example embodiments; and
FIG. 10 illustrates an example of a 5G network and system architecture according to certain example embodiments.

**DETAILED DESCRIPTION:**

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for improving distribution unit component cooperation is not intended to limit the scope of certain example embodiments, but is instead representative of selected example embodiments.

User throughput, or a throughput of a given user equipment (UE), is an important key performance indicator (KPI) used to monitor quality of services provided to an end user. In 3GPP, monitoring buffered throughput in each UE and associated bearer may assist in ensuring that a given end user experiences performance in line with their expectations. If an end user frequently experiences low quality services, the end user may change to alternate wireless services, resulting in a loss of income for the original network operator.

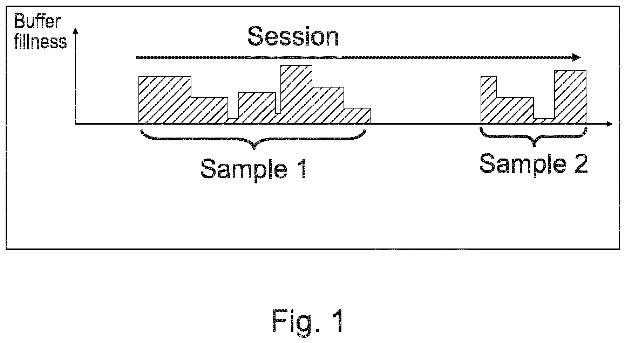

As illustrated in FIG. 1, buffered throughput may be determined according to Equation (1), such that:

$$Average\ DL\ UE\ throughput\ in\ base\ station = \frac{\sum_{Samples} ThpVolDL}{\sum_{BSamples} ThpTimeDL}$$

$$(1)$$

*ThpVolDL* may represent the data volume received by the UE (*i.e.,* volume of data transmitted downlink (DL)) for a particular sample on a given layer (such as, for example, radio link control (RLC) layer or medium access control (MAC) layer service data unit (SDU)). Similarly, *ThpTimeDL* may represent a burst duration on a given level (such as the distribution unit (DU) or MAC buffer) in the DL direction. In particular, *ThpTimeDL* may correspond with a transmission time of a data burst, minus a time period during which a last piece of data is transmitted from the buffer (*e.g.*, a transmission time interval (TTI) of a last piece of data) immediately before the buffer becomes empty. According to Equation (1), a sum of the volume values of a plurality of samples and a sum of time values of the plurality of samples captured during a predefined time interval may be used to calculate average throughput.

In order to achieve a throughput measurement that is independent of bursty traffic patterns, idle gaps between incoming data may be excluded in the measurements by considering each burst of data as one sample. As shown in FIG. 1, the gaps between the bursts may be identified based on empty buffers in DU.

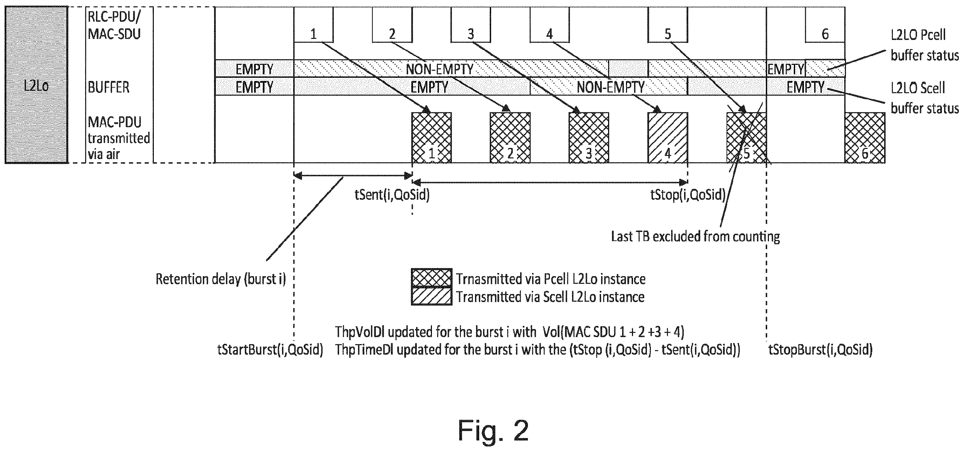

FIG. 2 illustrates an example of measurements on a MAC SDU level to distinguish between a duration of a given burst and its contribution to *ThpTimeDL.* As illustrated in FIG. 2, despite a data block having arrived into a previously empty Layer 2 Low (L2Lo) buffer (*e.g.*, tStartBurst(i,QoSid)) a first time instance $T_0$, the burst may begin to contribute to *ThpTimeDL* when a first data block starts to be transmitted (*e.g.*, over an air interface) to the UE (tSent(i,QoSid)), *e.g.*, at a second time instance $T_1$. In addition, the burst may end when the L2Lo buffer is empty (tStopBurst(i,QoSid)), *e.g.*, a last data block leaves the L2Lo buffer; however, the burst may stop contributing to *ThpTimeDL* when its second to last part (slot/transport block (TB)) has been transmitted to the UE (tStop(i,QoSid)). Exclusion of the last TB at the end of the burst may be requested when there is insufficient user data on the MAC SDU level to fill an entire TB. The gaps may then be filled in with padding bits on the MAC protocol data unit (PDU) level, which may not be perceived on the MAC SDU level, but the whole TB duration may apply. Thus, if such TBs were counted within the throughput (*e.g.*, to calculate a value of *ThpTimeDL*), a perception of degraded performance may be generated. As shown in FIG. 2, the burst may be evaluated globally by considering the L2Lo buffer status from both a primary cell (PCell) and second cells (SCells). Although there may be a time interval during which PCell L2Lo buffer is empty while the SCell L2Lo buffer is not empty, such a time interval may remain as a continuation of the burst.

It is noted that there may be some variations of the measurement principles described above based on the throughput measurement on RLC SDU level, and for contribution to *ThpTimeDL* based upon hybrid automatic repeat request (HARQ) re-transmission times.

Various disadvantages exist with current techniques, including a need for global burst evaluation based on a buffer status of both the PCell and all related SCells. From the user plane architecture perspective, L2Lo instances of the PCell and related SCells may act as independent subsystems connected to Level 2 high (L2Hi) (*i.e.*, one instance per data radio bearer (DRB) of the UE). As another example, in cases of carrier aggregation, implementing the measurement in L2Lo of the PCell may require transmitting all related information from SCells L2Lo to the PCell L2Lo. Furthermore, massive data transfers to the PCell L2Lo, tracking all relevant information to identify the burst, and calculating the *ThpTimeDL* may increase DU processor and memory usage which may result in delayed data transfer to the DU, thereby resulting in DU performance degradation. As another example, measurements implemented in L2Hi (which may represent part of the DU related to the RLC layer and be aware of all data sent on MAC SDU level to the PCell and SCell L2Lo instances and would offload SCell L2Lo instances from sending this information to PCell L2Lo to identify the global burst) may necessitate sending all relevant information in the time domain for each MAC SDU from SCells to the PCell L2Hi.

Certain example embodiments described herein may have various benefits and/or advantages to overcome the disadvantages described above. For example, certain example embodiments may support DU components cooperation by reducing processor and memory usage, and reducing UE performance degradation associated with DL MAC SDU implementation. Thus, certain example embodiments discussed below are directed to improvements in computer-related technology.

Various example embodiments described herein may be described in terms of MAC SDU level throughput, but may be applied to any of RLC SDU level throughput and/or HARQ re-transmission time included in throughput. In addition, in terms of L2Hi, various example embodiments may describe RLC PDU, but this may be interchangeable with MAC SDU.

In certain example embodiments, *ThpTimeDL* may be calculated by summing contributions of bursts from all DRBs from an observed measurement period. The contribution of each burst may be obtained as a time interval consisting of samples (*e.g.*, each sample related to slot duration), wherein each sample may include data in a L2Lo buffer of any part/TB of the burst, except for the last one of the related DRBs of the UE. The measurement may be implemented in L2Hi of the DU to which L2Lo burst reporting is performed at the end of each burst. The L2Lo may evaluate the start of the L2Lo burst when a new RLC PDU is received into an empty L2Lo buffer of the DRB, and/or at the end of the burst when the L2Lo buffer is empty.

Any particular L2Lo burst may include any combination of time stamps that may be reported to the L2Hi. For example, the time stamps may include: a time when a first part of the burst is received in L2Lo and sent to the UE (T0, T0'); a time of a last part (*e.g.*, a last TB) of the burst, except the last TB that has been sent to UE (T1') and related RLC PDU IDs (list of RLC PDUids') and volume (Vol(RLC PDUids')); a time when a last part (*e.g.*, TB) of the burst is sent to the UE (T2') and related RLC PDU ID (last RLC PDU id'); and/or a volume of the last part (*e.g.*, a last TB) of the burst (Last Volume).

In a case of carrier aggregation, no extra control information needs to be transmitted to the PCell L2Lo. The reporting of SCells L2Lo into an L2Hi instance (*e.g.*, just one per DRB) may be handled similarly to non-CA scenarios. For example, a contribution of each burst may be obtained as a time interval consisting of samples (*e.g.*, each sample related to slot duration), where during each sample, there may be either data in L2Lo of PCell and/or any L2Lo of SCells buffer of any part/TB of the burst except the last one of the related DRB of UE.

The L2Hi of the UE may serve as an anchor that may evaluate the burst contribution from DU perspective to *ThpTimeDL.* In case of very bursty traffic, one DU burst may be represented by only one RLC PDU, which may trigger reporting for each RLC PDU, and result in a higher volume of control information transmitted from L2Lo to L2Hi. This may occur in situations of low-load cells when reporting may affect performance. Alternatively, at busy times for high loaded cells, bursty traffic may not occur due to significant increases of retention delays in L2Lo, resulting in longer bursts in the time domain. The reporting rate from L2Lo to L2Hi may also decrease with each DRB. Higher loaded cells may be correlated with less control information transmitted from L2Lo to L2Hi, which may permit adaption for cell load conditions.

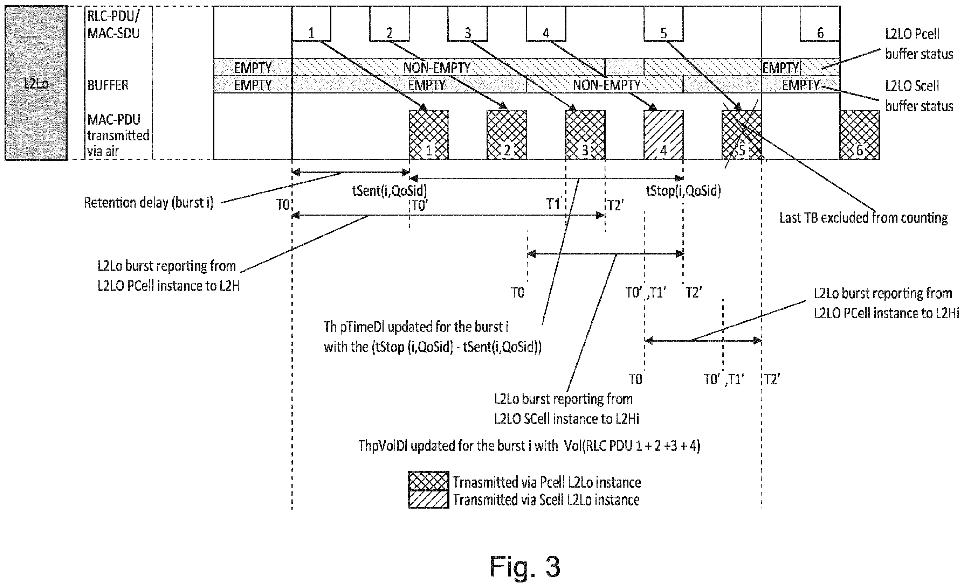

FIG. 3 illustrates various example embodiments for a carrier aggregation case with two (2) component carriers, one PCell and one SCell. RLC PDU1 may have been received at the L2Lo instance of the PCell with a previously empty buffer for the DRB; thus, the first part of the RLC PDU1 may have been received in L2Lo of the PCell, which may constitute a start of the burst. RLC PDUs 2-3 may then be transmitted to the L2Lo PCell. After MAC PDU3 related to the RLC PDU3 has been transmitted to UE (*e.g.*, via an air interface), the status of the buffer may change to empty.

The PCell L2Lo may then perform reporting to L2Hi (*e.g.,* T0', T1', T2', RLC PDU1, 2 IDs, RLC PDU3 volume as last part of the burst). The PCell L2Lo buffer status may change empty to non-empty after receiving the RLC PDU4. This may be considered as the start of a next new burst in PCell L2Lo. After a MAC PDU5 related to the RLC PDU5 has been transmitted to the UE via an air interface, a buffer status of PCell L2Lo may change to empty, as shown in FIG. 3. The PCell L2Lo may then report to L2Hi (*e.g.*, T0'=T1', T2', RLC PDU5 IDs, RLC PDU5 volume as last part of the burst). Additionally or alternatively, the SCell L2Lo may also perform certain procedures. As shown in FIG. 3, after receiving the RLC PDU4, the SCell L2Lo buffer status may change from empty to non-empty. This may be considered as the start of a new burst in SCell L2Lo. After a MAC PDU4 related to the RLC PDU4 has been transmitted to the UE (*e.g.*, via an air interface), the buffer status of SCell L2Lo may change to empty. The SCell L2Lo may then report to L2Hi (*e.g.*, T0'=T1', T2', RLC PDU4 ids, RLC PDU4 volume as last part of the burst).

The L2Hi may evaluate the status of the buffer of the PCell and the SCell in order to detect the bursts for the DRB. For example, the L2Hi for the DRB may continuously update the list of RLC PDU IDs that were sent to the PCell and SCell. In addition, the L2Hi may move in such a way that, after a RLC PDU1 is transmitted to the PCell, the L2Hi may wait for reporting from the L2Lo that includes the RLC PDU1. As shown in FIG. 3, the list of transmitted RLC PDUs may be updated with RLC PDU2 and PDU3, then a first report is received from PCell L2Lo that contains the RLC PDU1. L2Hi may read the report and determine that it is related to a burst from PCell L2Lo consisting of RLC PDU1, PDU2, and PDU3. L2Hi for the DRB may consider the TO' as the start of the burst for the DRB, and may wait to receive reporting from L2Lo related to RLC PDU4.

After this reporting has been received from SCell L2Lo, the L2Hi may evaluate the report and determine that it overlaps with a previous report from PCell L2Lo. Thus, the reported PCell and SCell L2Lo instance bursts may overlap in time; thus L2Hi may consider RLC PDU1, PDU2, PDU3, and PDU4 as belonging to the same DRB burst. After RLC PDU5 has been sent to the PCell L2Lo, the L2Hi may wait for reporting from the L2Lo. After the reporting is completed, the L2Hi may detect that the SCell L2Lo burst related to RLC PDU overlaps in time with previous one from SCell L2o; therefore, RLC PDU1, PDU2, PDU3, PDU4, and PDU5 may contribute to the same burst. After RLC PDU6 has been transmitted to PCell L2Lo, L2Hi may wait for reporting for the L2Lo of RLC PDU6. After the reporting has been executed, the L2Hi may determine that the PCell L2Lo burst related to RLC PDU6 does not overlap with a previous burst; L2Hi may then identify the sequence including RLC PDU1, PDU2, PDU3, PDU4, and PDU5 as one burst. In some example embodiments, RLC PDU5 may be excluded from counting; in addition, the end point in time of the burst contributing to the *ThpTimeDL* the T2' from the SCell L2Lo reporting related to RLC PDU4 may be considered. To improve visibility, *ThpTimeDL* may be updated for the burst $i$ with the (tStop (i,QoSid) - tSent(i,QoSid)), as shown in FIG. 3, wherein (QoSid) corresponds with the given quality of services provided, and i corresponds with an $i_{th}$ burst. In certain example embodiments, (tStop (i,QoSid) - tSent(i,QoSid)) may be related to (T2' - T0').

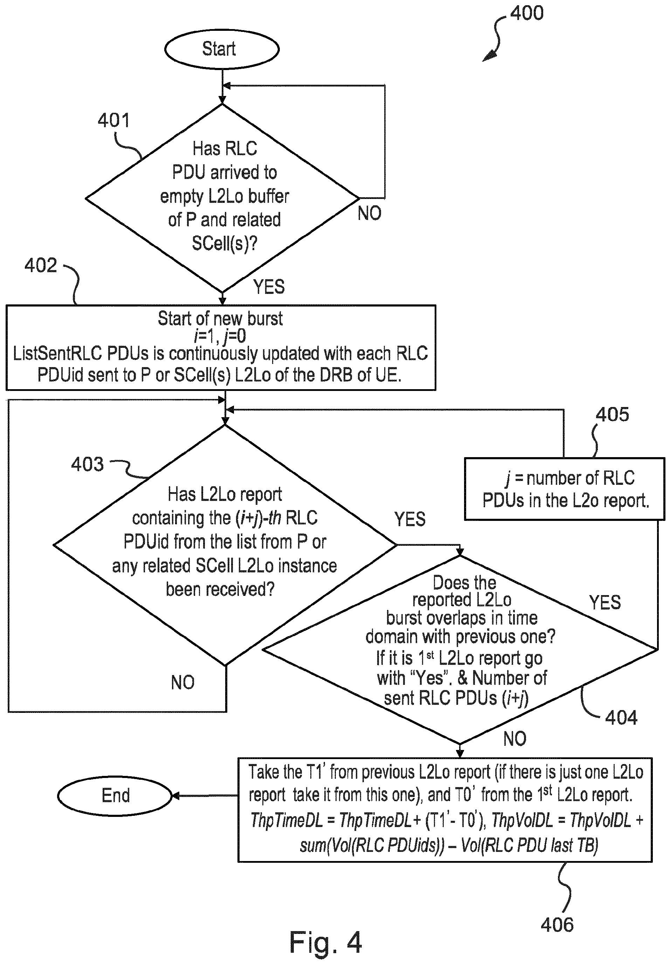

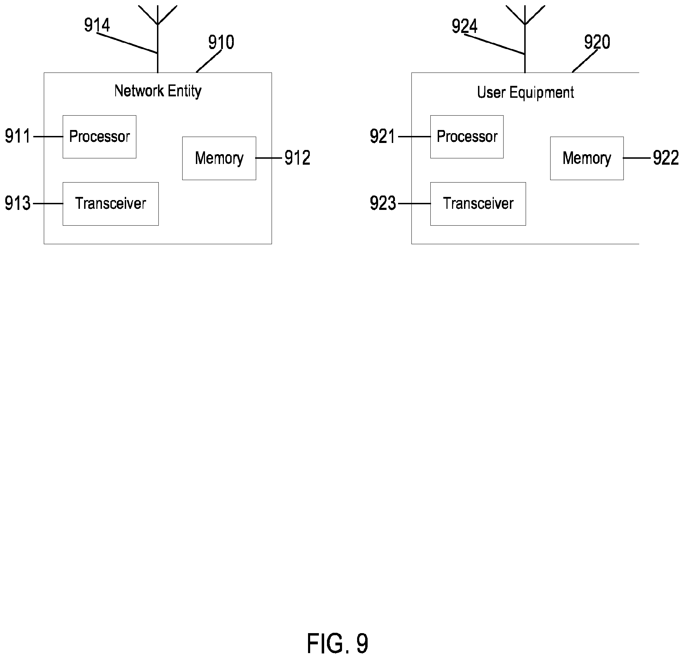

FIG. 4 illustrates an example of a flow diagram of a method 400 that may be performed by a NE, such as NE 910 illustrated in FIG. 9, according to various example embodiments. Specifically, FIG. 4 illustrates some example embodiments from L2Hi of a DU perspective for one global burst of DRB.

Various border cases may be considered, including the time interval for some services especially for very burst traffic for the DRB can differ from tens of ms to a few minutes (*e.g.*, depending on inactivity timer settings).

In some example embodiments, it may be ineffective to retain the data to wait on consequent RLC PDU, especially for long time intervals; thus, a timer (*e.g.*, several seconds) may be applied which, upon its expiration, it can be evaluated as the end of the burst. Similar challenges may occur if, for some of the RLC PDUs, no reporting is received from the L2Lo. In this case, a timer may also be applied. Upon expiration of the timer, the L2Hi may exclude all RLC PDUs contributing the burst as invalid, and may consider the burst start evaluated from the next RLC PDU as valid reporting from the L2Lo.

At step 401, the method may include determining whether an RLC PDU has arrived at an empty L2Lo buffer of a PCell and related SCells. This step may be repetitively performed until it is determined that an RLC PDU has arrived at an empty L2Lo buffer of a PCell and related SCells.

At step 402, upon determining that an RLC PDU has arrived at an empty L2Lo buffer of a PCell and related SCells, the method may include starting a new burst, where $i=1$ and $j=0$. *ListSentRLC* PDUs may be continuously updated with each RLC PDU ID sent to the PCell or SCells L2Lo of the DRB for the UE.

At step 403, the method may include determining whether an L2Lo report determining L2Lo burst containing the $(i+j)$-*th* RLC PDU ID from a list of PCells and/or any related Scell L2Lo instances has been received. This step may be repetitively performed until it is determined that an L2Lo report containing the $(i+j)$-*th* RLC PDU ID from a list of PCells and/or any related Scell L2Lo instances has been received.

At step 404, upon determining that an L2Lo report determining L2Lo burst containing the $(i+j)$-*th* RLC PDU ID from a list of PCells and/or any related Scell L2Lo instances has been received at step 403, the method may include determining whether the reported L2Lo burst overlaps in time domain with a previous one.

At step 405, if it is determined that the reported L2Lo burst overlaps in time domain with a previous one at step 404, the method may include continuing counting the burst and/or setting $j$=number of RLC PDUs in the L2Lo report.

At step 406, if it is determined that the reported L2Lo burst does not overlap in time domain with a previous one at step 404, the method may include considering it as the end of the burst having ended based upon buffer conditions in all L2Lo buffers of PCells and S cells and/or taking the T1' from a previous L2Lo report (*e.g.*, if there is just one L2Lo report, take it from this one) and TO' from the 1st L2Lo report. For example, *ThpTimeDL = ThpTimeDL* + (T1' - T0'), *ThpVolDL = ThpVolDL + sum(Vol(RLC PDUids)) - Vol(RLC PDU last TB),* wherein *ThpTimeDL* and *ThpVolDL* results may be aggregated over the measurement period. (T1' - T0') may correspond with a contribution of a given burst counted in a given cycle, *ThpTimeDL* may correspond with counted previous bursts before the given burst from the beginning of the measurement period, and *ThpTimeDL* may correspond with the beginning of a measurement period including a contribution of a given burst counted in a given cycle. *ThpVolDL* may then be reset to zero at the end of the current measurement period, thereby starting a next measurement period.

In certain example embodiments, at the end of a measurement period, the method may include summing a volume of all bursts associated within a measurement period. At the end of a measurement period, the method may include summing a duration of all bursts associated with the measurement period. The method may further include dividing a sum of volume of all bursts associated within a measurement period by a sum of a duration of all bursts associated with a measurement period.

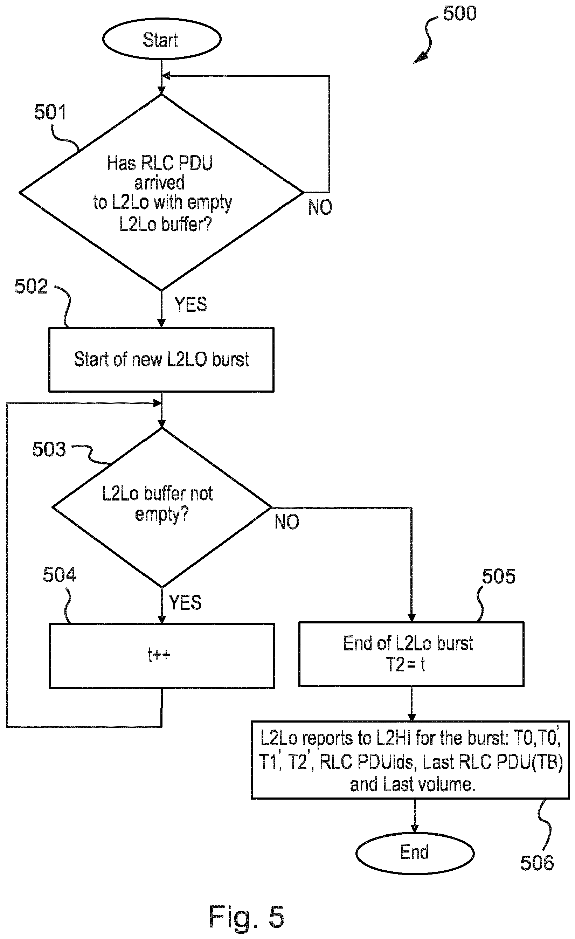

FIG. 5 illustrates an example of a flow diagram of a method 500 that may be performed by a NE, such as NE 910 illustrated in FIG. 9, according to various example embodiments.

At step 501, the method may include determining whether an RLC PDU has arrived to a L2Lo with an empty L2Lo buffer. This step may be repetitively performed until it is determined that the RLC PDU arrived to the L2Lo with an empty L2Lo buffer.

At step 502, upon determining that the RLC PDU arrived to the L2Lo with empty L2Lo buffer, the method may include starting a new L2Lo burst.

At step 503, the method may include determining whether the L2Lo buffer is not empty.

At step 504, if the L2Lo buffer is determined to be empty at step 503, the method may include adding an integer of time with granularity of one slot (*e.g.*, $t++ = t + 1ms$), and returning to step 503.

At step 505, if the L2Lo buffer is determined to not be empty at step 503, the method may include ending the L2Lo burst $T2=t$.

At 506, the method may include the L2Lo reporting to L2Hi for the burst, including parameters to be reported for L2Lo bursts (*e.g.*, T0, T0', T1', T2', RLC PDU IDs, last RLC PDU(TB) and last volume).

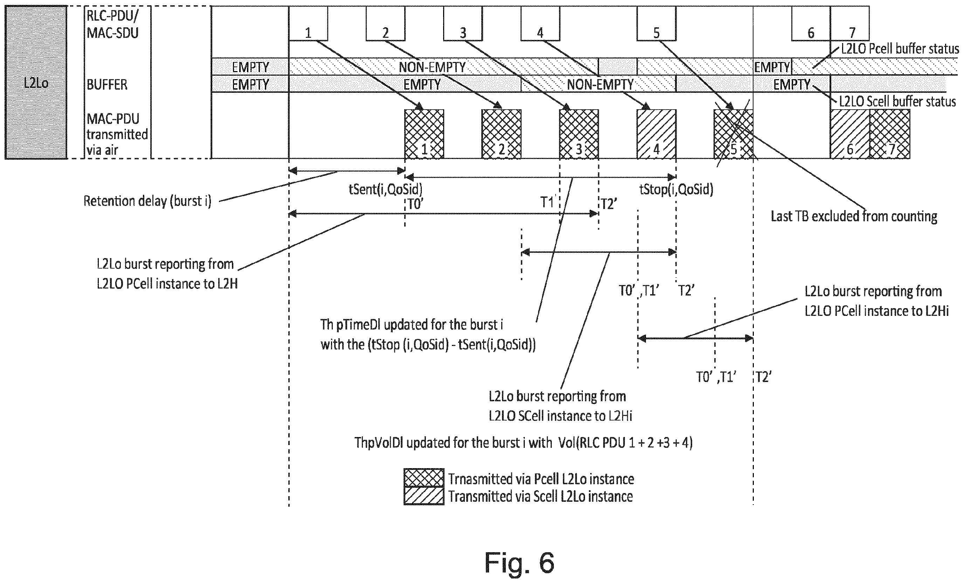

As illustrated in FIG. 6, certain example embodiments may be performed by offloading the L2Lo from sending the RLC PDU IDs within the relevant L2Lo burst report. Specifically, the L2Hi may evaluate the global burst end based on overlapping the bursts from the related L2Lo instances. Once the reported bursts from all related L2Lo instances do not overlap with a previous burst report, L2Hi may evaluate it as end of the burst for the given DRB of the UE applying the same rules, as discussed above. However, L2Hi being unaware of which RLC PDU IDs the relevant L2Lo burst reported is related to may complicate the L2Hi identifying the end of burst precisely since the L2Hi may be unaware of any additional time it should wait to receive L2Lo reports of missing RLC PDU IDs contributing the same burst. The L2Lo bursts that may still contribute to the same burst may be longer in time; thus, it may be difficult to configure a waiting time in L2Hi that would guarantee a precise global end of burst identification. As a result, the length of the reported part of L2Lo burst may be limited, for example, to 1 second; in this way, even the L2Lo burst may occur in the time domain for extended period of time (*e.g.*, several minutes), and the fragmented reporting for the burst for each second may allow the L2Hi to identify this as the end of continuation of an existing burst.

FIG. 6 depicts some example embodiments when a L2Hi for DRB of CA UE with 2 CCs has been identified after the RLC PDU5 that has been transmitted (e.g., via air interface) to a UE that both L2Lo buffer instances of a PCell and SCell are empty, but has no information to which the RLC PDU IDs that are already-provided L2Lo instances reports are related to. The L2Hi may then wait for the next L2Lo reports from the PCell and SCell. Reporting of L2Lo bursts each second may allow identification of the end of the burst in significantly less time as compared to waiting for a complete but potentially long L2Lo burst reporting. A timer may be started from the range of couple of seconds for L2Lo burst reporting being reported each second. If, during the lifetime of the timer, no reports from the related L2Lo instances are received, the last L2Lo report may indicate the end of burst. If at least one L2Lo report is received during the lifetime of the timer, L2Hi may evaluate if it overlaps with L2Lo burst of previous report. If it is, L2Hi may evaluate it as a continuation of the existing burst; however, if not, L2Hi may evaluate it as an end of the existing burst identified based on previous L2Lo report for the DRB.

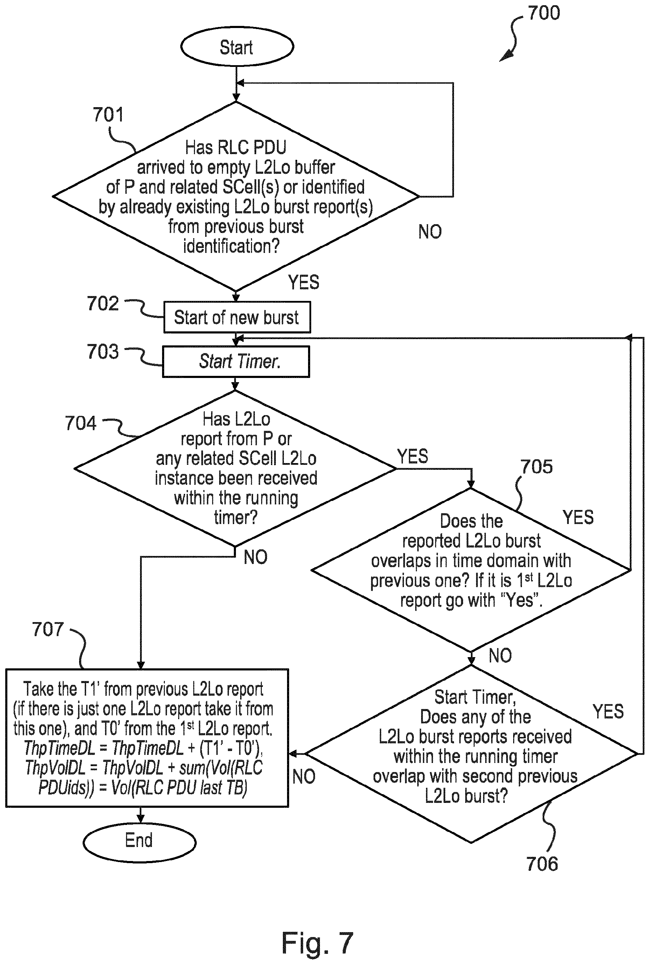

FIG. 7 illustrates an example of a flow diagram of a method 700 that may be performed by a NE, such as NE 910 illustrated in FIG. 9, from L2Hi of DU perspective for one global burst of DRB, according to various example embodiments.

At step 701, the method may include determining whether a RLC PDU arrived at an empty L2Lo buffer of a PCell and related S Cells, or identified by already existing L2Lo burst reports from a previous burst identification. This step may be repetitively performed until it is determined that an RLC PDU arrived at an empty L2Lo buffer of a PCell and related S Cells, or identified by already existing L2Lo burst reports from a previous burst identification.

At step 702, upon determining that an RLC PDU arrived at an empty L2Lo buffer of a PCell and related S Cells, or identified by already existing L2Lo burst reports from a previous burst identification, the method may include starting a new burst. At step 703, the method may include starting a timer.

At step 704, the method may include determining whether a L2Lo report from a PCell or any related SCell L2Lo instance has been received within the timer started at step 703.

At step 705, upon determining that a L2Lo report from a PCell or any related SCell L2Lo instance has been received within the timer started at 703, the method may include determining whether a reported L2Lo burst overlaps in time domain with a previous one. For example, upon determining that at least one layer 2 low report from a primary cell or any related secondary cell layer 2 low instance has been received within the at least one timer, the method may include determining whether a reported layer 2 low burst overlaps in time domain with a previously reported layer 2 low burst and starting at least one timer. If it is determined that a reported L2Lo burst overlaps in time domain with a previous one, the method may return to 703.

At step 706, if it is determined that a reported L2Lo burst does not overlap in time domain with a previous one at 705, the method may include starting a timer, and determining whether any of the L2Lo burst reports received within the running timer overlap with second previous L2Lo burst. For example, upon determining that at least one layer 2 low report from a primary cell or any related secondary cell layer 2 low instance has been received within the at least one timer, the method may include determining whether a reported layer 2 low burst overlaps in time domain with a previously reported layer 2 low burst and starting at least one timer. For example, upon determining that the reported layer 2 low burst does not overlap in time domain with a previously reported layer 2 low burst or that no layer 2 low burst report has been received within the timer, the method may include considering the reported layer 2 low burst as ended. If it is determined that any of the L2Lo burst reports received within the running timer overlap with second previous L2Lo burst, the method may return to 703.

At step 707, upon determining that a L2Lo report from a PCell or any related SCell L2Lo instance has not been received at 704, or determining that any of the L2Lo burst reports received within the running timer do not overlap with second previous L2Lo burst, the method may include taking the T1' from a previous L2Lo report (*e.g.*, if there is just one L2Lo report take it from this one), and TO' from the first L2Lo report. For example, *ThpTimeDL = ThpTimeDL + (T1' - T0'), ThpVolDL = ThpVolDL + sum(Vol(RLC PDUids')) - Vol(RLC PDU last TB)*, wherein *ThpTimeDL* and *ThpVolDL* results may be aggregated over the measurement period. For example, upon determining that the new burst has ended, the method may include summing a volume of all reported layer 2 low reports to determine a volume of the new burst. For example, upon determining that the new burst has ended, the method may include subtracting a point in time of a last layer 2 low report end from a start of a new burst to determine a new burst duration. (T1' - T0' may correspond with a contribution of a given burst counted in a given cycle, *ThpTimeDL* may correspond with counted previous bursts before the given burst from the beginning of the measurement period, and *ThpTimeDL* may correspond with the beginning of a measurement period including a contribution of a given burst counted in a given cycle. *ThpVolDL* may then be reset to zero at the end of the current measurement period, thereby starting a next measurement period.

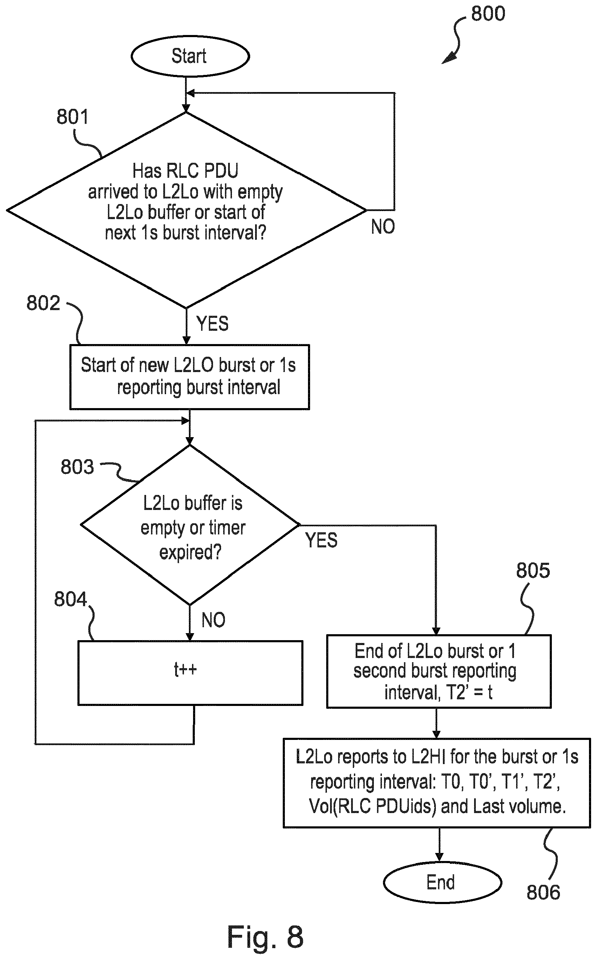

FIG. 8 illustrates an example of a flow diagram of a method 800 that may be performed by a NE, such as NE 910 illustrated in FIG. 9, from L2Lo of DU perspective for one L2Lo burst or 1 second reporting interval of the burst of DRB, according to various example embodiments.

At step 801, the method may include determining whether an RLC PDU arrived at L2Lo with an empty L2Lo buffer or start of a next one second burst interval. This step may be repetitively performed until it is determined that RLC PDU arrived at L2Lo with an empty L2Lo buffer or start of next 1s burst interval.

At step 802, the method may include starting a new L2L burst or one second reporting burst interval start timer (*e.g.*, 1s).

At step 803, the method may include determining whether a L2Lo buffer is empty and/or timer expired.

At step 804, upon determining that a L2Lo buffer is not empty or timer has not expired, the method may include adding an integer of time with granularity of one slot (*e.g.*, $t++ = t + 1ms$), and returning to step 803.

At step 805, the method may include ending the L2Lo burst or 1 second burst reporting interval, T2' = t. For example, upon determining the at least one layer 2 low buffer is empty or that the timer has expired with not empty layer 2 low buffer, the method may include reporting to a layer 2 radio link layer a determination of the at least one layer 2 low burst or timer duration, at least one identifier, and at least one of an identifier of the at least one radio link control protocol data unit and related volume.

At step 806, the method may include the L2Lo reporting to the L2Hi for the burst, including parameters to be reported for L2Lo bursts (*e.g.*, T0, T0', T1', T2', RLC PDU IDs, last RLC PDU(TB) and last volume).

FIG. 9 illustrates an example of a system according to certain example embodiments. In one example embodiment, a system may include multiple devices, such as, for example, NE 910.

NE 910 may be one or more of a base station (*e.g.*, 3G UMTS NodeB, 4G LTE Evolved NodeB, or 5G NR Next Generation NodeB), a serving gateway, a server, and/or any other access node or combination thereof.

NE 910 may further include at least one gNB-centralized unit (CU), which may be associated with at least one gNB- DU. The at least one gNB-CU and the at least one gNB-DU may be in communication via at least one F1 interface, at least one $X_n$-C interface, and/or at least one NG interface via a $5^{th}$ generation core (5GC).

UE 920 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, NE 910 and/or UE 920 may be one or more of a citizens broadband radio service device (CBSD).

NE 910 and/or UE 920 may include at least one processor, respectively indicated as 911 and 921. Processors 911 and 921 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 912 and 922. The memory may be fixed or removable. The memory may include computer program instructions or computer code contained therein. Memories 912 and 922 may independently be any suitable storage device, such as a non-transitory computer-readable medium. The term "non-transitory," as used herein, may correspond to a limitation of the medium itself (*i.e.*, tangible, not a signal) as opposed to a limitation on data storage persistency (*e.g.*, random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processors 911 and 921, memories 912 and 922, and any subset thereof, may be configured to provide means corresponding to the various blocks of FIGs. 3-8. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 9, transceivers 913 and 923 may be provided, and one or more devices may also include at least one antenna, respectively illustrated as 914 and 924. The device may have many antennas, such as an array of antennas configured for multiple input multiple output (MIMO) communications, or multiple antennas for multiple RATs. Other configurations of these devices, for example, may be provided. Transceivers 913 and 923 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above (*i.e*, FIGs. 3-8). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus may include circuitry configured to perform any of the processes or functions illustrated in FIGs. 3-8. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (*e.g.*, firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

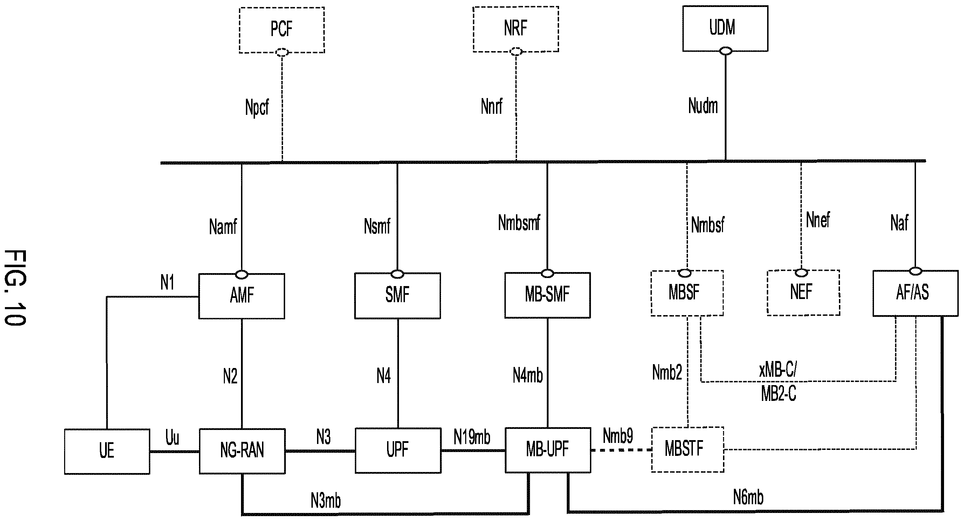

FIG. 10 illustrates an example of a 5G network and system architecture according to certain example embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 10 may be similar to NE 910 and UE 920, respectively. The user plane function (UPF) may provide services such as intra-RAT and inter-RAT mobility, routing and forwarding of data packets, inspection of packets, user plane quality of service (QoS) processing, buffering of DL packets, and/or triggering of DL data notifications. The application function (AF) may primarily interface with the core network to facilitate application usage of traffic routing and interact with the policy framework.

According to certain example embodiments, processors 911 and 921, and memories 912 and 922, may be included in or may form a part of processing circuitry or control circuitry. In addition, in some example embodiments, transceivers 913 and 923 may be included in or may form a part of transceiving circuitry.

In some example embodiments, an apparatus (*e.g.*, NE 910 and/or UE 920) may include means for performing a method, a process, or any of the variants discussed herein. Examples of the means may include one or more processors, memory, controllers, transmitters, receivers, and/or computer program code for causing the performance of the operations.

In various example embodiments, apparatus 910 may be controlled by memory 912 and processor 911 to determine whether at least one radio link control protocol data unit has arrived at an empty layer 2 low buffer of a primary cell and at least one related secondary cell; upon determining that the at least one radio link control protocol data unit has arrived at the empty layer 2 low buffer of the primary cell and at least one related secondary cell, start a new burst; and determine whether at least one layer 2 low report comprising at least one of an identifier of the at least one radio link control protocol data unit from a list of primary cell or related secondary cell layer 2 low instances has been received.

Certain example embodiments may be directed to an apparatus that includes means for performing any of the methods described herein including, for example, means for determining whether at least one radio link control protocol data unit has arrived at an empty layer 2 low buffer of a primary cell and at least one related secondary cell; means for, upon determining that the at least one radio link control protocol data unit has arrived at the empty layer 2 low buffer of the primary cell and at least one related secondary cell, starting a new burst; and means for determining whether at least one layer 2 low report comprising at least one of an identifier of the at least one radio link control protocol data unit from a list of primary cell or related secondary cell layer 2 low instances has been received.

In various example embodiments, apparatus 910 may be controlled by memory 912 and processor 911 to determine whether at least one radio link control protocol data unit has arrived at an empty layer 2 low buffer; upon determining that the at least one radio link control protocol data unit has arrived at the empty layer 2 low buffer, start a new layer 2 low burst; and determine whether the layer 2 low buffer is not empty.

Certain example embodiments may be directed to an apparatus that includes means for performing any of the methods described herein including, for example, means for determining whether at least one radio link control protocol data unit has arrived at an empty layer 2 low buffer; means for, upon determining that the at least one radio link control protocol data unit has arrived at the empty layer 2 low buffer, starting a new layer 2 low burst; and means for determining whether the layer 2 low buffer is not empty.

In various example embodiments, apparatus 910 may be controlled by memory 912 and processor 911 to determine whether at least one radio link control protocol data unit has arrived at an empty layer 2 low buffer of a primary cell and at least one related secondary cell or is identified by existing layer 2 low buffer burst reports from a previous burst identification; start at least one new burst; and start at least one timer.

Certain example embodiments may be directed to an apparatus that includes means for performing any of the methods described herein including, for example, means for determining whether at least one radio link control protocol data unit has arrived at an empty layer 2 low buffer of a primary cell and at least one related secondary cell or is identified by existing layer 2 low buffer burst reports from a previous burst identification; means for starting at least one new burst; and means for starting at least one timer.

In various example embodiments, apparatus 910 may be controlled by memory 912 and processor 911 to determine whether at least one radio link control protocol data unit has arrived at least one layer 2 low with an empty layer 2 low buffer or a start of a next one second burst interval; start at least one new burst; and start at least one timer.

Certain example embodiments may be directed to an apparatus that includes means for performing any of the methods described herein including, for example, means for determining whether at least one radio link control protocol data unit has arrived at least one layer 2 low with an empty layer 2 low buffer or a start of a next one second burst interval; means for starting at least one new burst; and means for starting at least one timer.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

**Claims**

1. An apparatus comprising:

   at least one processor; and
   at least one memory storing instructions that, when executed by the at least one processor, cause the apparatus at least to:

> determine whether at least one radio link control protocol data unit has arrived at an empty layer 2 low buffer of a primary cell and at least one related secondary cell;
> upon determining that the at least one radio link control protocol data unit has arrived at the empty layer 2 low buffer of the primary cell and at least one related secondary cell, start a new burst; and
> determine whether at least one layer 2 low report determining layer 2 low burst comprising at least one of an identifier of the at least one radio link control protocol data unit from a list of primary cell or related secondary cell layer 2 low instances has been received.

2. The apparatus of claim 1, wherein the at least one memory and the instructions, when executed by the at least one processor, further cause the apparatus at least to:
upon determining that at least one layer 2 low report determining layer 2 low burst comprising at least one of an identifier of the at least one radio link control protocol data unit from a list of primary cell or related secondary cell layer 2 low instances has been received, determine whether the reported layer 2 low burst overlaps in time domain with a previous one.

3. The apparatus of claim 1 or 2, wherein the at least one memory and the instructions, when executed by the at least one processor, further cause the apparatus at least to:
upon determining that the reported layer 2 low burst overlaps in time domain with a previous one, continue counting the new burst.

4. The apparatus of any of claims 1-3, wherein the at least one memory and the instructions, when executed by the at least one processor, further cause the apparatus at least to:
upon determining that the reported layer 2 low burst does not overlap in time domain with a previous one, consider the new burst as having ended.

5. The apparatus of any of claims 1-4, wherein the at least one memory and the instructions, when executed by the at least one processor, further cause the apparatus at least to:
upon determining the end of the new burst, sum a volume of all reported layer 2 low reports as a volume of the new burst.

6. The apparatus of any of claims 1-5, wherein the at least one memory and the instructions, when executed by the at least one processor, further cause the apparatus at least to:
upon determining the end of the burst, determine a burst duration according to a point in time of the last layer 2 low burst end minus the start of the new burst.

7. The apparatus of any of claims 1-6, wherein the determining is performed at a layer 2 radio link control.

8. An apparatus comprising:

> at least one processor; and
> at least one memory storing instructions that, when executed by the at least one processor, cause the apparatus at least to:
>
> > determine whether at least one radio link control protocol data unit has arrived at an empty layer 2 low buffer;
> > upon determining that the at least one radio link control protocol data unit has arrived at the empty layer 2 low buffer, start a new layer 2 low burst; and
> > determine whether the layer 2 low buffer is not empty.

9. The apparatus of claim 8, wherein the at least one memory and the instructions, when executed by the at least one processor, further cause the apparatus at least to:
upon determining the layer 2 low burst is empty, provide reporting to a layer 2 radio link configured to determine at least one of layer 2 low burst duration, at least one identifier, and at least one of an identifier of the at least one radio link control protocol data unit and related volume, and wherein the determining is performed at a layer 2 medium access control.

10. An apparatus comprising:

at least one processor; and
at least one memory storing instructions that, when executed by the at least one processor, cause the apparatus at least to:

determine whether at least one radio link control protocol data unit has arrived at an empty layer 2 low buffer of a primary cell and at least one related secondary cell;
start at least one new burst; and
start at least one timer.

11. The apparatus of claim 10, wherein the at least one memory and the instructions, when executed by the at least one processor, further cause the apparatus at least to:

upon determining that at least one layer 2 low report from a primary cell or any related secondary cell layer 2 low instance has been received within the at least one timer, determine whether a reported layer 2 low burst overlaps in time domain with a previously reported layer 2 low burst and start at least one timer, and
upon determining that the reported layer 2 low burst overlaps in time domain with a previously reported layer 2 low burst, count the new burst.

12. The apparatus of any of claims 10 or 11, wherein the at least one memory and the instructions, when executed by the at least one processor, further cause the apparatus at least to:
upon determining that the reported layer 2 low burst does not overlap in time domain with a previously reported layer 2 low burst or that no layer 2 low burst report has been received within the timer, consider that the new burst has ended.

13. The apparatus of any of claims 11-12, wherein the at least one memory and the instructions, when executed by the at least one processor, further cause the apparatus at least to:
upon determining that the new burst has ended, sum a volume of all reported layer 2 low reports to determine a volume of the new burst.

14. The apparatus of any of claims 11-13, wherein the at least one memory and the instructions, when executed by the at least one processor, further cause the apparatus at least to:
upon determining that the new burst has ended, subtract a point in time of a last layer 2 low report end from a start of a new burst to determine a new burst duration.

15. The apparatus of any of claims 11-14, wherein the determining is performed at a layer 2 radio link control.

Fig. 1

Fig. 2

Fig. 3

400

Start

401

Has RLC
PDU arrived to
empty L2Lo buffer
of P and related
SCell(s)?

NO

YES

402

Start of new burst
$i=1, j=0$
ListSentRLC PDUs is continuously updated with each RLC
PDUid sent to P or SCell(s) L2Lo of the DRB of UE.

405

$j$ = number of RLC
PDUs in the L2o report.

403

Has L2Lo report
containing the $(i+j)$-th RLC
PDUid from the list from P or
any related SCell L2Lo instance
been received?

YES

NO

Does the
reported L2Lo
burst overlaps in time
domain with previous one?
If it is 1st L2Lo report go
with "Yes". & Number of
sent RLC PDUs $(i+j)$

YES

404

NO

End

406

Take the T1' from previous L2Lo report (if there is just one L2Lo
report take it from this one), and T0' from the 1st L2Lo report.
$ThpTimeDL = ThpTimeDL + (T1' - T0')$, $ThpVolDL = ThpVolDL +$
$sum(Vol(RLC PDUids)) - Vol(RLC PDU last TB)$

Fig. 4

500

**Start**

501

Has RLC PDU
arrived
to L2Lo with empty
L2Lo buffer?

NO

YES

502

Start of new L2LO burst

503

L2Lo buffer not
empty?

NO

YES

504

t++

505

End of L2Lo burst
$T2 = t$

L2Lo reports to L2HI for the burst: $T0, T0'$,
$T1', T2'$, RLC PDUids, Last RLC PDU(TB)
and Last volume.

**End**

506

Fig. 5

Fig. 6

Fig. 7

800

Start

801

Has RLC PDU
arrived to L2Lo with empty
L2Lo buffer or start of
next 1s burst interval?

NO

YES

802

Start of new L2LO burst or 1s
reporting burst interval

803

L2Lo buffer is
empty or timer
expired?

YES

NO

805

804

t++

End of L2Lo burst or 1
second burst reporting
interval, T2' = t

L2Lo reports to L2HI for the burst or 1s
reporting interval: T0, T0', T1', T2',
Vol(RLC PDUids) and Last volume.

End

806

Fig. 8

FIG. 9

FIG. 10